# EUROPÄISCHE PATENTSCHRIFT

(11) **EP 3 110 679 B1**
(45) Veröffentlichungstag und Bekanntmachung des Hinweises auf die Patenterteilung: **27.06.2018**
(21) Anmeldenummer: 15704579.0
(22) Anmeldetag: 17.02.2015
(51) Int. Cl.: B62D 1/16, B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 28.02.2014 DE 102014102661
(43) Veröffentlichungstag der Anmeldung: 04.01.2017
(73) Patentinhaber: ThyssenKrupp Presta AG, 9492 Eschen (LI); thyssenkrupp AG, 45143 Essen (DE)
(72) Erfinder: SIEWERT, Michael, CH-7306 Fläsch (CH)
(74) Vertreter: thyssenkrupp Intellectual Property GmbH
(86) Internationale Anmeldenummer: PCT/EP2015/053348
(87) Internationale Veröffentlichungsnummer: WO 2015/128228

(56) Entgegenhaltungen:
- EP-A1- 2 085 291
- JP-A- S60 113 771
- US-A- 1 655 138

## Beschreibung

### Technisches Gebiet

Die vorliegende Erfindung betrifft eine Lenksäule für ein Kraftfahrzeug umfassend eine karosserieseitige Halterung umfassend zwei Befestigungselemente, die jeweils einen Befestigungsabschnitt zum Befestigen des jeweiligen Befestigungselements am Chassis des Kraftfahrzeuges aufweisen und jeweils einen Halteabschnitt zum Halten einer eine Lenkspindel drehbar um eine Rotationsachse lagernden Manteleinheit aufweisen.

### Stand der Technik

Lenksäulen für Kraftfahrzeuge sind bekannt, bei welchen in einer Manteleinheit eine Lenkspindel drehbar gelagert ist, wobei die Lenkspindel zur Übertragung eines Lenkmoments von einem an der Lenkspindel angebrachten Lenkrad auf ein zu lenkendes Rad dient. Zur Befestigung der Lenksäule am Chassis des Kraftfahrzeuges ist eine Montageeinheit vorgesehen, die einerseits mit dem Chassis des Kraftfahrzeuges und andererseits direkt oder indirekt mit der Manteleinheit verbunden ist.

Die Montageeinheit der Lenksäule, welche zur Befestigung der Lenksäule an dem Fahrzeug dient, kann mehrteilig ausgeführt sein. Die Struktur der Montageeinheit beeinflusst die Steifigkeit und die Eigenfrequenz, mit welcher die Lenksäule beim Eintrag von Fahreinflüssen und Antriebsschwingungen schwingt, erheblich. Um eine möglichst hohe Eigenfrequenz zu erreichen und entsprechend Vibrationen und Schwingungseinflüsse für den jeweiligen Fahrer nicht spürbar zu halten, ist gefordert, dass eine Lenksäule eine möglichst hohe Eigenfrequenz aufweist. Eine solche hohe Eigenfrequenz wird dadurch erreicht, dass die Montageeinheit sowohl eine steife Struktur aufweist, als auch einen möglichst geringen Materialeinsatz aufweist, da die Eigenfrequenz der gesamten Lenksäule von der Steifigkeit sowie von deren Masse abhängig ist.

Aus der US 1,655,138 A ist eine Montageeinheit bekannt, bei welcher eine etwa rechtwinklige Anbindung zwischen benachbarten Seitenwangen der Montageeinheit und einem mit dem Fahrzeug anbindbaren Verbindungsflansch besteht. Diese Montageeinheit weist nur eine geringe Steifigkeit auf.
Aus der DE 10 2006 056 582 A1 ist eine Lenksäule bekannt, bei der die Montageeinheit mindestens ein Befestigungselement umfasst, welches eine Seitenwange aufweist, an welcher die Manteleinheit gehalten wird. Das Befestigungselement umfasst auch einen Befestigungsabschnitt, welcher mit dem Chassis des Kraftfahrzeugs verbindbar ist. Erste und zweite Befestigungslaschen können an dem Befestigungsabschnitt vorgesehen sein, welche gegenüber der Seitenwange jeweils um einen Winkel geneigt angeordnet sind. Weitere konstruktive Merkmale sind bekannt, wie beispielsweise das Einbringen von Sicken und einem tiefgezogenen Rand, welche eine erhöhte Steifigkeit der Montageeinheit bereitstellen.

Die EP 2 085 291 A1 zeigt eine Lenksäule gemäß dem Oberbegriff des Anspruchs 1, mit einem Befestigungselement, bei dem zwischen dem Halteabschnitt und dem Befestigungsabschnitt ein Verbindungsabschnitt angeordnet ist, der jeweils über eine Schnittgerade mit dem Halteabschnitt und dem Befestigungsabschnitt verbunden ist, wobei die Flächennormalen der Abschnitte zueinander winkelig angeordnet sind.

### Darstellung der Erfindung

Ausgehend von dem bekannten Stand der Technik ist es eine Aufgabe der vorliegenden Erfindung, eine Lenksäule für ein Kraftfahrzeug bereitzustellen, welche vereinfacht und mit einem geringen Materialeinsatz hergestellt werden kann.
Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.
Entsprechend wird eine Lenksäule für ein Kraftfahrzeug vorgeschlagen, umfassend eine karosserieseitige Halterung umfassend zwei Befestigungselemente, die jeweils einen Befestigungsabschnitt zum Befestigen des jeweiligen Befestigungselements am Chassis des Kraftfahrzeuges und jeweils einen Halteabschnitt zum Halten einer eine Lenkspindel drehbar um eine Rotationsachse lagernden Manteleinheit aufweisen, wobei die Rotationsachse zwischen den beiden Halteabschnitten angeordnet ist und der jeweilige Befestigungsabschnitt und der jeweilige Halteabschnitt einstückig miteinander ausgebildet sind. Erfindungsgemäß ist zwischen dem jeweiligen Befestigungsabschnitt und dem jeweiligen Halteabschnitt ein Verbindungsabschnitt angeordnet, der einstückig mit dem Befestigungsabschnitt und dem Halteabschnitt ausgebildet ist, wobei der jeweilige Verbindungsabschnitt mit dem jeweiligen Befestigungsabschnitt über eine erste Schnittgerade verbunden ist und der jeweilige Verbindungsabschnitt mit dem jeweiligen Halteabschnitt über eine zweite Schnittgerade verbunden ist und die erste Schnittgerade und die zweite Schnittgerade eine Zwischenebene mit einer Flächennormalen aufspannen, wobei die zweite Schnittgerade mit einem Befestigungspunkt des Halteabschnitts an der Manteleinheit eine Halteebene mit einer Flächennormalen aufspannt, und wobei die erste Schnittgerade mit einem Befestigungspunkt des Befestigungsabschnitts am Chassis eine Befestigungsebene mit einer Flächennormalen aufspannt, und die drei Flächennormalen zueinander winkelig angeordnet sind, wobei sich mindestens in einem der beiden Befestigungselemente die erste Schnittgerade und die zweite Schnittgerade in einem Schnittbereich treffen, der innerhalb eines aufgespannten Kugelbereiches mit einem Durchmesser, der kleiner oder gleich als der doppelte Abstand der Befestigungspunkte zueinander, liegt, wobei die beiden Befestigungspunkte ebenfalls innerhalb des aufgespannten Kugelbereiches liegen.

Mit anderen Worten ist vorgesehen, dass die erste Schnittgerade und die zweite Schnittgerade mindestens eines der Befestigungselemente sich in einem Schnittbereich treffen, der innerhalb eines aufgespannten Kugelbereiches mit einem Durchmesser liegt, der kleiner als oder gleich dem doppelten Abstand der Befestigungspunkte zueinander ist, wobei die beiden Befestigungspunkte ebenfalls innerhalb des aufgespannten Kugelbereiches liegen.
Da zwischen dem jeweiligen Befestigungsabschnitt und dem jeweiligen Halteabschnitt ein Verbindungsabschnitt angeordnet ist, der einstückig mit dem Befestigungsabschnitt und dem Halteabschnitt ausgebildet ist, wobei der jeweilige Verbindungsabschnitt mit dem jeweiligen Befestigungsabschnitt über eine erste Schnittgerade verbunden ist und der jeweilige Verbindungsabschnitt mit dem jeweiligen Halteabschnitt über eine zweite Schnittgerade verbunden ist, wobei diese beiden Schnittgeraden eine Zwischenebene mit einer Flächennormalen aufspannen und, wobei die zweite Schnittgerade mit einem Befestigungspunkt des Halteabschnitts an der Manteleinheit eine Halteebene mit einer Flächennormalen aufspannt und, wobei die erste Schnittgerade mit einem Befestigungspunkt des Befestigungsabschnitts am Chassis eine Befestigungsebene mit eimer Flächennormalen aufspannt, wobei die drei Flächennormalen zueinander winkelig angeordnet sind, ergibt sich ein besonders einfacher und steifer Aufbau der Lenksäule.

Unter dem Befestigungspunkt des Halteabschnitts an der Manteleinheit ist ein Punkt, in dem die Manteleinheit mit dem Halteabschnitt in Kontakt steht und in dem die beiden Teile miteinander verbunden sind, zu verstehen. Im Falle einer Schraubverbindung oder Nietverbindung oder einer Klemmverbindung mit einem Spannbolzen ist der Befestigungspunkt als der Punkt auf der von der Öffnung, durch die die Schraube oder der Bolzen geführt ist, aufgespannten Fläche im Halteabschnitt zu bezeichnen, der auf der Achse des Verbindungselements liegt, zu verstehen. Es ist dabei unmittelbar einsichtig, dass die Manteleinheit auch zusätzliche Elemente aufweisen kann, wie beispielsweise ein Halteteil, um die Verbindung zwischen dem Halteabschnitt und der Manteleinheit zu erleichtern.

Unter dem Befestigungspunkt des Befestigungsabschnitts am Chassis ist entweder ein Punkt, in dem das Chassis mit dem Befestigungsabschnitt in Kontakt steht und in dem die beiden Teile miteinander verbunden sind zu verstehen. Im Falle einer Schraubverbindung oder Nietverbindung ist der Befestigungspunkt als der Punkt auf der von der Öffnung, durch die die Schraube oder der Niet geführt ist, aufgespannten Fläche im Befestigungsabschnitt, der auf der Achse des Verbindungselements liegt, zu verstehen.

Die einstückigen Befestigungselemente sind aus einem einzigen Teil gefertigt und nicht aus mehreren Teilen, die durch ein nachträgliches Fügen zu einer Baugruppe kombiniert werden. Im einfachsten und bevorzugten Fall sind beide Befestigungselemente aus einem Blechstück in einer Biege-Press-Stanz-Operation hergestellt.

Bevorzugt kann die Lenkspindel die Lenkbewegung von dem Lenkrad unter Zwischenschaltung eines Lenkgetriebes und besonders unter Einsatz einer Hilfskraftunterstützung auf das lenkbare Rad übertragen.

Es ist aber auch möglich, dass die Lenkbewegung von der Lenkspindel sensorisch, beispielsweise elektrisch, elektronisch oder magnetisch, abgetastet wird und die abgetasteten Signale in eine Steuerung eingespeist werden, die über eine Einrichtung eine Verschwenkung des lenkbaren Rades zur Darstellung der Lenkbewegung ausführt. Derartige Systeme sind als Steer-by-wire bekannt.

Eine bevorzugte weitere Erhöhung der Steifigkeit wird erreicht, wenn sich mindestens in einem der beiden Befestigungselemente die erste Schnittgerade und die zweite Schnittgerade in einem Schnittbereich treffen, der als Schnittpunkt ausgebildet ist, oder in einem aufgespannten Kugelbereich mit einem Durchmesser angeordnet ist, wobei der Durchmesser kleiner ist als das Dreifache der Materialstärke des für das Befestigungselement verwendeten Materials, also bevorzugt der Blechdicke des in der Press-Stanz-Operation eingesetzten Bleches. Mit anderen Worten ist es noch mehr bevorzugt, wenn die erste Schnittgerade und die zweite Schnittgerade mindestens eines der Befestigungselemente sich in einem Schnittbereich treffen, der als Schnittpunkt ausgebildet ist, oder in einem aufgespannten Kugelbereich mit einem Durchmesser angeordnet ist, wobei der Durchmesser kleiner ist als das Dreifache der Materialstärke des für das Befestigungselement verwendeten Materials, also bevorzugt der Blechdicke des in der Press-Stanz-Operation eingesetzten Bleches.

Mit Vorteil ist jeweils genau ein einziger Verbindungsabschnitt zwischen dem jeweiligen Befestigungsabschnitt und dem jeweiligen Halteabschnitt ausgebildet.

Das Herstellverfahren wird bevorzugt wesentlich vereinfacht, wenn der jeweilige Verbindungsabschnitt im Wesentlichen als ebenes Dreieck ausgebildet ist und sowohl der Halteabschnitt als auch der Befestigungsabschnitt gegenüber dem Verbindungsabschnitt abgewinkelt sind. Dadurch, dass der Halteabschnitt mit dem Befestigungsabschnitt über einen ebenen Verbindungsabschnitt verbunden ist, kann der Halteabschnitt relativ zu dem Befestigungsabschnitt so ausgestaltet werden, dass eine erhöhte Steifigkeit des Befestigungselementes resultiert. Auf diese Weise kann das Befestigungselement steifer ausgebildet werden und gleichzeitig mit einem geringeren Materialeinsatz gefertigt werden. Dadurch, dass der Verbindungsabschnitt eben ausgeführt ist, kann die Herstellung noch weiter vereinfacht werden und das Befestigungselement insbesondere auch durch Stanzen und Biegen eines Blechstreifens hergestellt werden.

Unter einer "*im Wesentlichen*" dreieckigen Struktur wird verstanden, dass der Verbindungsabschnitt drei Seiten aufweist, welche unter Winkeln vorliegen. Es ist jedoch nicht erforderlich, dass sich die Seiten schneiden und direkt in Spitzen der jeweiligen Dreiecke ausformen. Vielmehr kann im Bereich der Spitzen auch Material fehlen und entsprechend "*stumpfe Spitzen"* vorliegen. Ebenso kann der Verbindungsabschnitt an den Rändern zum Befestigungsabschnitt und Halteabschnitt Unterbrüche in den Biegekanten, sowie Materialausnehmungen aufweisen.

Wenn die Spitze des dreieckigen Verbindungsabschnittes zum Schnittbereich der jeweiligen ersten und zweiten Schnittgeraden wird, kann eine in alle Raumrichtungen steife und stabile Kopplung des Halteabschnittes mit dem Befestigungsabschnitt erreicht werden. Entsprechend kann hier eine Steifigkeit erzielt werden, welche ähnlich verbundener U-Profile ausgebildet ist.

Die der Spitze des Verbindungsabschnittes gegenüberliegende Kante wird bevorzugt so positioniert, dass die ersten und zweiten Schnittgeraden im Wesentlichen direkt durch die Krafteinleitungs- beziehungsweise Anbindungsbereiche verlaufen. Auf diese Weise kann in Abhängigkeit der verfügbaren Wirkflächen jeweils ein Optimum aus kurzer Hebelkrafteinleitung an den jeweiligen Schnittgeraden und dem maximal zur Verfügung stehenden Material zur Krafteinleitung beziehungsweise Kraftführung gefunden werden. Durch die Kombination aus dem von den jeweiligen Krafteinleitungspunkten entfernten Schnittknoten zwischen der ersten Schnittgerade und der zweiten Schnittgerade sowie der direkten Kraftübertragung zwischen den jeweiligen Krafteinleitungspunkten wird eine Momentkopplung des Befestigungsabschnittes mit dem Halteabschnitt erreicht und entsprechend eine Biegesteifigkeit erzielt.

In einer bevorzugten Weiterbildung der Erfindung sind die Raumwinkel zwischen den Schnittgeraden in einem bestimmten Wertebereich. Es hat sich gezeigt, dass ein steifer Lenksäulenaufbau erreicht wird, wenn zwischen der ersten Schnittgeraden und der zweiten Schnittgeraden ein Raumwinkel α im Bereich von 45° bis 85° ausgebildet ist. Die Steifigkeit kann weiter erhöht werden, wenn bevorzugt der Winkelbereich von 55° bis 80° liegt. Es ist allerdings noch mehr zu bevorzugen, einen Winkelbereich zwischen den ersten und zweiten Schnittgeraden von 65° bis 75 auszubilden, wobei ganz besonders bevorzugt der Winkel von 70° ist.

Eine besonders einfache Herstellbarkeit des Befestigungselements ergibt sich, wenn der Halteabschnitt, der Befestigungsabschnitt und der Verbindungsabschnitt als ebene Flächen ausgebildet sind, die allerdings Öffnungen und Unterbrüche aufweisen können. So kann das Befestigungselement einfach aus einem ebenen Blechstreifen gebogen werden.

Durch die einfache Geometrie des Befestigungselements wird es weiterhin möglich, das Befestigungselement als Stanz- und Biegeteil aus einem eine konstante Materialstärke aufweisenden Blech herzustellen oder auch aus einem Faserverbundwerkstoff herzustellen und entsprechend mit einem geringen Materialeinsatz und einfachen Werkzeugen herzustellen.

Eine weitere Erhöhung der Steifigkeit ergibt sich, wenn an der dem Verbindungsabschnitt abgewendeten Seite des Befestigungsabschnittes ein gegenüber diesem abgewinkelter Versteifungsabschnitt angeordnet ist, wobei entlang einer Biegekante zwischen dem Befestigungsabschnitt und dem Versteifungsabschnitt eine dritte Schnittgerade ausgebildet ist, welche den Schnittbereich schneidet.

Eine noch weitere Erhöhung der Steifigkeit ergibt sich, wenn an der dem Verbindungsabschnitt abgewendeten Seite des Halteabschnitts ein gegenüber diesem abgewinkelter Führungsabschnitt angeordnet ist, wobei entlang einer Biegekante zwischen dem Führungsabschnitt und dem Halteabschnitt eine vierte Schnittgerade ausgebildet ist, welche den Schnittbereich schneidet.

In einer weiteren bevorzugten Ausführungsform sind die Halteebenen des ersten Befestigungselements und des zweiten Befestigungselements, zwischen denen die Manteleinheit gehalten ist, zueinander parallel angeordnet. Dabei sind die ersten Schnittgeraden der in Einbaulage angeordneten zwei Befestigungselemente jeweils zueinander unter einem Raumwinkel von 60° bis 120° ausgerichtet. Bevorzugt ist dabei ein Raumwinkel im Bereich von 70° bis 110° dargestellt. Besonders bevorzugt sind Winkelbereiche von 80° bis 100° und ganz besonders bevorzugt ein Winkel von 90°.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule für ein Kraftfahrzeug in einem ersten Ausführungsbeispiel;
- Figur 2: eine schematische perspektivische Ansicht der Lenksäule gemäß Figur 1 in einer teilweise auseinandergezogenen Darstellung;
- Figur 3: ein Querschnitt durch die in Figur 1 gezeigte Lenksäule;
- Figur 4: ein Längsschnitt durch die in Figur 1 gezeigte Lenksäule;
- Figur 5: eine schematische perspektivische Darstellung eines Befestigungselements für eine Lenksäule in einer ersten Orientierung;
- Figur 6: eine schematische perspektivische Darstellung des Befestigungselements der Figur 5 in einer zweiten Orientierung;
- Figur 7: eine schematische perspektivische Darstellung einer Lenksäule für ein Kraftfahrzeug in einer alternativen Ausführung;
- Figur 8: eine schematische perspektivische Darstellung einer Lenksäule für ein Kraftfahrzeug in einer weiteren alternativen Ausführung;
- Figur 9: eine schematische perspektivische Darstellung einer Lenksäule für ein Kraftfahrzeug in einer weiteren alternativen Ausführung;
- Figur 10: eine schematische perspektivische Darstellung in einer teilweise auseinandergezogenen Form in einer weiteren alternativen Darstellung;
- Figur 11: eine schematische perspektivische Darstellung eines Befestigungselements in einer weiteren Ausführung in einer ersten Orientierung;
- Figur 12: eine schematische perspektivische Darstellung des Befestigungselements aus Figur 11 in einer zweiten Orientierung;
- Figuren 13-15: schematische Darstellungen von Strukturen für Gelege, die als Basis für ein aus einem Faserverbundmaterial hergestelltes Befestigungselement dienen können.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

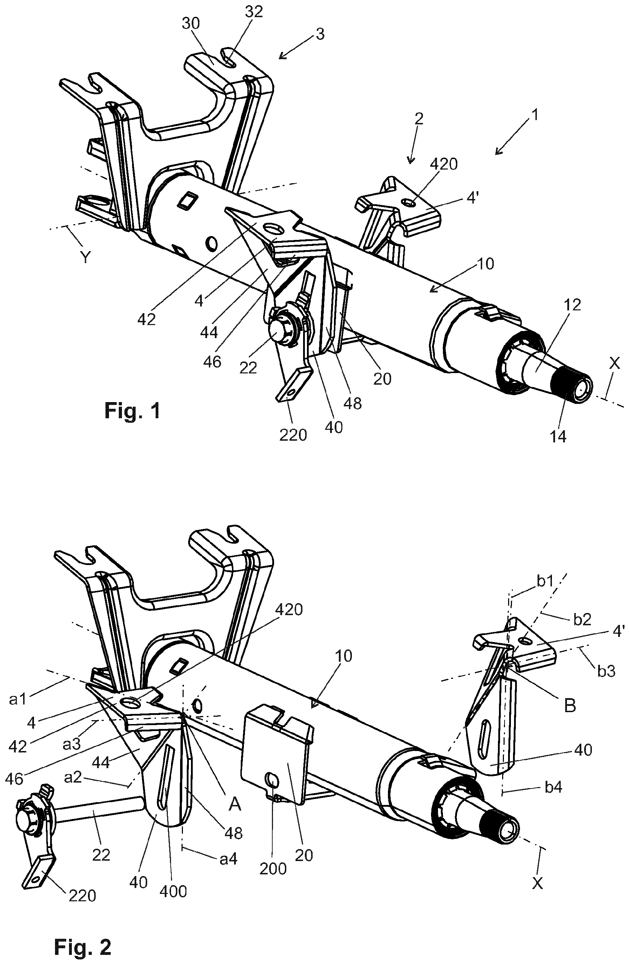

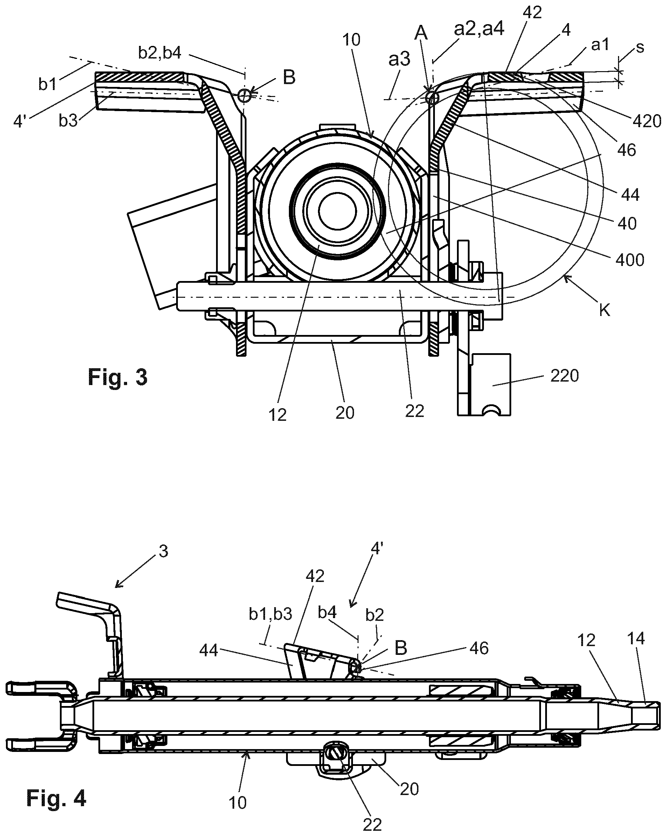

Die Figuren 1 bis 4 zeigen eine Lenksäule 1 in unterschiedlichen Darstellungen. Die Lenksäule 1 umfasst eine Manteleinheit 10, in welcher eine Lenkspindel 12 drehbar gelagert ist. An dem lenkradseitigen Ende 14 der Lenkspindel 12 kann ein hier nicht dargestelltes Lenkrad montiert werden, so dass mittels der Lenkspindel 12 ein von einem Fahrer auf das Lenkrad eingebrachtes Lenkmoment in bekannter Weise auf ein zu lenkendes Rad übertragen werden kann. Die Lenkspindel 12 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 12 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire bekannt.

Eine Montageeinheit 2 ist vorgesehen, welche zur Befestigung der Manteleinheit 10 an einem hier nicht gezeigten Chassis eines Kraftfahrzeugs dient. Weiterhin ist eine Trageinheit 3 vorgesehen, welche ebenfalls zum Befestigen der Manteleinheit 10 an dem Chassis des Kraftfahrzeugs dient.

Die Trageinheit 3 ist in dem in den Figuren 1 bis 4 gezeigten Ausführungsbeispiel mit einem Konsolenabschnitt 30 versehen, welcher über entsprechende Befestigungsausnehmungen 32 starr am Chassis des Kraftfahrzeugs befestigt werden kann. Die Trageinheit 3 ist so ausgebildet, dass sie die Manteleinheit 10 um eine horizontale Verschwenkachse Y herum verschwenkbar hält. Damit kann das lenkradseitige Ende 14 der Lenkspindel 12 um die horizontale Verschwenkachse Y herum angehoben oder abgesenkt werden, um auf dieser Weise eine Höheneinstellung des Lenkrades bereitzustellen. Über die Höheneinstellung des Lenkrades kann entsprechend die Lenksäule 1 und damit die Position des am lenkradseitigen Ende 14 der Lenkspindel 12 angeordneten Lenkrads an die jeweilige Sitzposition eines Fahrers angepasst werden, um die Ergonomie zu verbessern.

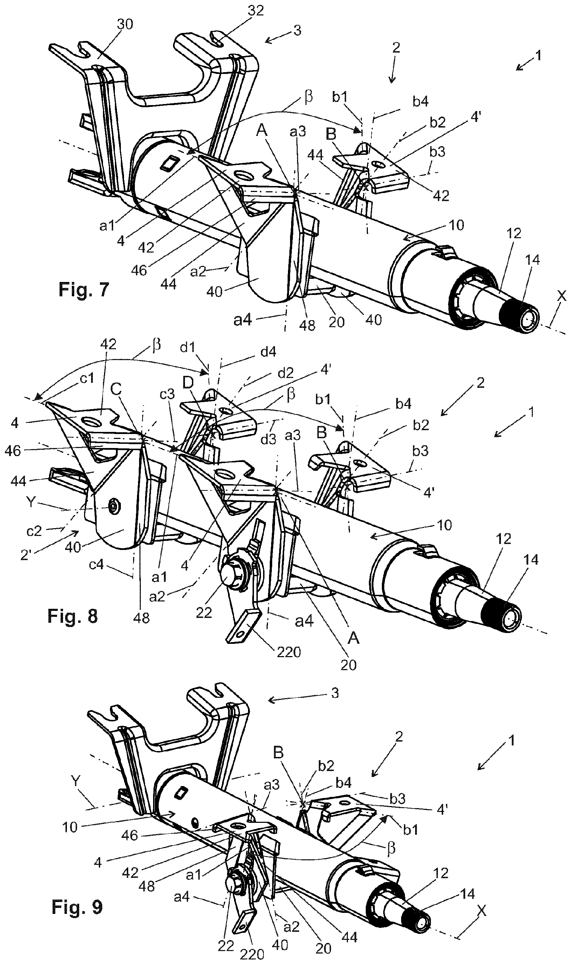

Die Montageeinheit 2 umfasst zwei Befestigungselemente 4, 4', über welche die Manteleinheit 10 am Chassis eines Kraftfahrzeugs befestigt ist. Die der Manteleinheit 10 umfasst ein Halteteil 20, zur Darstellung der Verbindung der Befestigungselemente 4, 4' mit der Manteleinheit 10. Die Befestigungselemente 4, 4' weisen hierfür jeweils einen Halteabschnitt 40 auf, welcher im gezeigten Ausführungsbeispiel als flächiger, ebener Abschnitt in Form einer Seitenwange ausgebildet ist. Am Halteabschnitt 40 des Befestigungselements 4, 4' wird die Manteleinheit 10 über das Halteteil 20 gehalten. Dabei sind die sich auf beiden Seiten der Manteleinheit 10 erstreckenden Halteabschnitte 40 parallel zueinander ausgerichtet und halten die Manteleinheit 10 zwischen sich. Die Manteleinheit 10 ist dabei im Befestigungspunkt 40b mit dem Halteabschnitt 40 festgelegt. Der Befestigungspunkt 40b ist dabei der Punkt, in dem die Manteleinheit 10 mit dem Halteabschnitt 40 in Kontakt steht und in dem die beiden Teile miteinander verbunden sind. Hier im Beispiel liegt der Befestigungspunkt 40b auf der vom Langloch 400 aufgespannten Fläche im Halteabschnitt 40 in dem Punkt, der auf Achse des Fixierbolzens 22 liegt. Im Falle einer Schraubverbindung oder Nietverbindung, wie dies bei nicht verstellbaren Lenksäulen vorgesehen sein kann, ist der Befestigungspunkt der Punkt auf der von der Öffnung im Halteabschnitt aufgespannten Ebene, der auf der Achse der Schraube oder des Nietes liegt. Alternativ, wenn auch weniger bevorzugt, könnte die Befestigung auch auf andere Weise, beispielsweise Schweißen, Kleben oder dergleichen erfolgen (siehe auch Figur 7). In diesem Fall ist der Befestigungspunkt ein Punkt, in dem die Manteleinheit mit dem Halteabschnitt 40 in Kontakt steht und in dem die beiden Teile miteinander verbunden sind.

Die Befestigungselemente 4, 4' weisen weiterhin jeweils einen Befestigungsabschnitt 42 auf, welcher zur starren Anbindung des jeweiligen Befestigungselementes 4, 4' an das Chassis des Kraftfahrzeuges dient. Hierzu sind beispielsweise Befestigungsöffnungen 420 in dem Befestigungsabschnitten 42 vorgesehen, durch welche hindurch das jeweilige Befestigungselement 4, 4' über Schrauben oder Bolzen an definierten Befestigungspunkten 42b am Chassis des Kraftfahrzeugs festgelegt werden kann. Der Befestigungspunkt 42b ist dabei der Punkt auf der von der Öffnung aufgespannten Fläche im Befestigungsabschnitt, der durch die Achse des Verbindungselements führt. Als Verbindungselemente sind neben Schrauben oder Bolzen auch Niete möglich. Alternativ, wenn auch weniger bevorzugt, könnte die Befestigung auch auf andere Weise, beispielsweise Schweißen, Kleben oder dergleichen erfolgen. In diesem Fall ist der Befestigungspunkt ein Punkt, in dem das Chassis mit dem Befestigungsabschnitt 42 in Kontakt steht und in dem die beiden Teile miteinander verbunden sind.

Der Befestigungsabschnitt 42 ist gegenüber dem Halteabschnitt 40 abgewinkelt und liegt in dem gezeigten Ausführungsbeispiel unter einem Winkel von 90° vor. Der Winkel wird dabei als Raumwinkel zwischen der durch den Befestigungsabschnitt 42 und der durch den Halteabschnitt 40 ausgebildeten Ebene bestimmt. Der Winkel hängt jedoch von den jeweiligen Einbaubedingungen im Kraftfahrzeug ab, so dass die vorliegenden Ausführungsformen nicht auf den genannten Winkel von 90° beschränkt ist. Vielmehr ist als Randbedingung zu verstehen, dass der Befestigungsabschnitt 42 an einem dazu komplementären Abschnitt am Chassis des Kraftfahrzeugs befestigt werden soll und entsprechend ausgeformt ist. Die Halteabschnitte 40 der beiden Befestigungselemente 4, 4' sind üblicher Weise parallel zueinander ausgebildet, können aber je nach Gestaltung der Manteleinheit 10 auch unter anderen Winkeln zueinander angeordnet sein.

Mit anderen Worten sind der Halteabschnitt 40 und der Befestigungsabschnitt 42 derart abgewinkelt zueinander ausgebildet, dass die durch die jeweiligen Abschnitte ausgebildeten Ebenen im Wesentlichen senkrecht zueinander stehen. Beliebige andere Orientierungen sind jedoch ebenfalls möglich, abhängig davon, wie der jeweilige Befestigungsabschnitt 42 an dem Chassis des Kraftfahrzeuges angebunden werden kann und welche Orientierung er gegenüber dem Halteabschnitt 40 aufweist.

Bei der Verwendung von zwei Befestigungselementen 4, 4' zum Befestigen der Manteleinheit 10 an dem Chassis des Kraftfahrzeugs kann je nach Beschaffenheit des Chassis auch jedes Befestigungselement 4, 4' einen anderen Winkel zwischen dem Halteabschnitt 40 und dem Befestigungsabschnitt 42 aufweisen.

Um die oben angedeutete Höheneinstellung des lenkradseitigen Endes 14 der Lenkspindel 12 zu ermöglichen, ist die Manteleinheit 10 zwischen den Halteabschnitten 40 der Befestigungselemente 4, 4' mittels eines Fixierbolzens 22 fixierbar und lösbar gehalten. Der Fixierbolzen 22 verbindet die Halteabschnitte 40 der beiden Befestigungselemente 4, 4' miteinander, wobei das Halteteil 20, das mit der Manteleinheit 10 verbunden ist, dazwischen liegt und entsprechend mittels des Fixierbolzens 22 mit den Befestigungselementen 4, 4' verspannbar ist.

Der Fixierbolzen 22 ist über einen an sich bekannten Mechanismus so ausgestaltet, dass eine Verschwenkung eines Fixierhebels 220 in eine Schließposition in einem Verspannen der beiden Halteabschnitte 40 der beiden Befestigungselemente 4, 4' miteinander sowie mit dem Halteteil 20 und damit auch mit der Manteleinheit 10 resultiert, um die Manteleinheit 10 in einer vorbestimmten Position relativ zu den Befestigungselementen 4, 4' zu fixieren. Ist der Fixierhebel 220 jedoch in eine Öffnungsposition verschwenkt und damit der Fixierbolzen 22 gelöst, kann die Manteleinheit 10 um die horizontale Verschwenkachse Y herum aufwärts beziehungsweise abwärts verschwenkt werden.

Um diese Verschwenkung zu ermöglichen ist in dem Halteabschnitt 40 ein Langloch 400 vorgesehen, welches eine Auf- und Abbewegung des Fixierbolzens 22 und damit auch die mit diesem über das Halteteil 20 verbundene Manteleinheit 10. Im Halteteil 20 ist ebenfalls ein Langloch 200 vorgesehen, welches sich in einer im Wesentlichen senkrecht zu der Ausdehnung des Langlochs 400 des Halteabschnittes 40 ausgebildeten Richtung erstreckt, und welches für den entsprechenden Längenausgleich in Richtung der Spindelachse X sorgt, so dass eine Verschwenkung um die horizontale Verschwenkachse Y herum erfolgen kann.

Die Befestigungselemente 4, 4' weisen weiterhin jeweils einen Verbindungsabschnitt 44 auf, welcher zwischen dem Halteabschnitt 40 und dem Befestigungsabschnitt 42 ausgebildet ist. Der Verbindungsabschnitt 44 verbindet damit den Halteabschnitt 40 mit dem Befestigungsabschnitt 42.

Da der Befestigungsabschnitt 42 gegenüber dem Halteabschnitt 40 abgewinkelt ist, sind damit auch der Halteabschnitt 40 und der Befestigungsabschnitt 42 gegenüber dem Verbindungsabschnitt 44 abgewinkelt.

Der Verbindungsabschnitt 44 ist in dem gezeigten Ausführungsbeispiel als ebener Abschnitt ausgebildet und hat im Wesentlichen die Form eines ebenen Dreiecks.

Der Verbindungsabschnitt 44 bildet mit dem Befestigungsabschnitt 42 entlang der die Abwinkelung bereitstellenden Biegekante eine erste Schnittgerade a1 aus. Beim Befestigungselement 4' ist analog eine erste Schnittgerade b1 entlang der Biegekante zwischen dem Halteabschnitt 40 und dem Verbindungsabschnitt 44 ausgebildet. Im Nachfolgenden wird aus Gründen der Einfachheit nur das erste Befestigungselement 4 ausführlich beschrieben. Diese Beschreibung gilt jedoch für alle hier gezeigten Befestigungselemente 4, 4' gleichermaßen.

Zwischen dem Halteabschnitt 40 und dem Verbindungsabschnitt 44 wird entlang der die Abwinkelung bereitstellenden Biegekante entsprechend eine zweite Schnittgerade a2 ausgebildet.

Die erste Schnittgerade a1 und die zweite Schnittgerade a2 schneiden sich in einem Schnittbereich A. Der Schnittbereich A kann hier als Schnittpunkt der beiden Schnittgeraden a1, a2 ausgebildet sein. Der Schnittbereich A kann mit der Spitze des als ebenes Dreieck ausgebildeten Verbindungsabschnittes 44 zusammenfallen.

Der Halteabschnitt 40, der Befestigungsabschnitt 42 und der Verbindungsabschnitt 44 sind hier jeweils als ebene Flächen ausgebildet.

Neben dem Halteabschnitt 40, dem Befestigungsabschnitt 42 und dem Verbindungsabschnitt 44 weist das Befestigungselement 4 weitere Abschnitte auf, die eine weitere Verbesserung der Anbindungseigenschaften ermöglichen. In dem gezeigten Beispiel ist auch ein sich an den Befestigungsabschnitt 42 anschließender Versteifungsabschnitt 46 vorgesehen, welcher im gezeigten Ausführungsbeispiel durch eine umgebördelte Kante des Befestigungsabschnittes 42 ausgebildet wird. Der Versteifungsabschnitt 46 ist an einer dem Verbindungsabschnitt 44 abgewendeten Seite des Befestigungsabschnitts 42 vorgesehen.

Der Versteifungsabschnitt 46 bildet entlang der Biegekante mit dem Befestigungsabschnitt 42 eine dritte Schnittgerade a3 aus, die den Schnittbereich A schneidet und die sich entsprechend im Schnittbereich A mit der ersten Schnittgerade a1 und der zweiten Schnittgerade a2 trifft.

Weiterhin ist ein Führungsabschnitt 48 vorgesehen, der sich an den Halteabschnitt 40 anschließt. Der Führungsabschnitt 48 ist an einer dem Verbindungsabschnitt 44 abgewendeten Seite des Halteabschnitts 40 vorgesehen. Der Führungsabschnitt 48 ist gegenüber dem Halteabschnitt 40 ebenfalls unter einem Winkel angeordnet, so dass entlang der Biegekante eine vierte Schnittgerade a4 ausgebildet wird. Auch die vierte Schnittgerade a4 verläuft durch den Schnittbereich A und trifft sich entsprechend mit der ersten Schnittgerade a1, der zweiten Schnittgerade a2 und der dritten Schnittgerade a3 in Schnittbereich A.

Der Schnittbereich A kann - neben seiner Ausbildung als tatsächlicher Schnittpunkt - auch als Bereich innerhalb eines aufgespannten Kugelbereichs mit einem Durchmesser r ausgebildet sein, wobei der Durchmesser r des Kugelbereichs bevorzugt kleiner ist, als das Dreifache der Materialstärke s des das Befestigungselement 4 ausbildenden Materials. Die drei oder vier Schnittgeraden a1, a2, a3 und a4 treffen sich entsprechend in dem Schnittbereich A derart, dass die Schnittgeraden die entsprechend definierte Kugel schneiden oder zumindest tangieren.

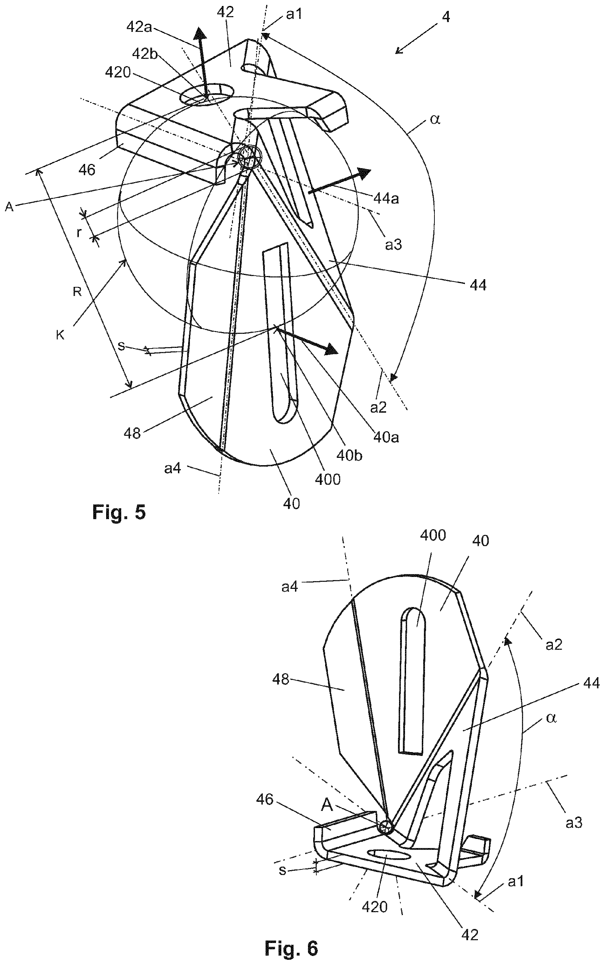

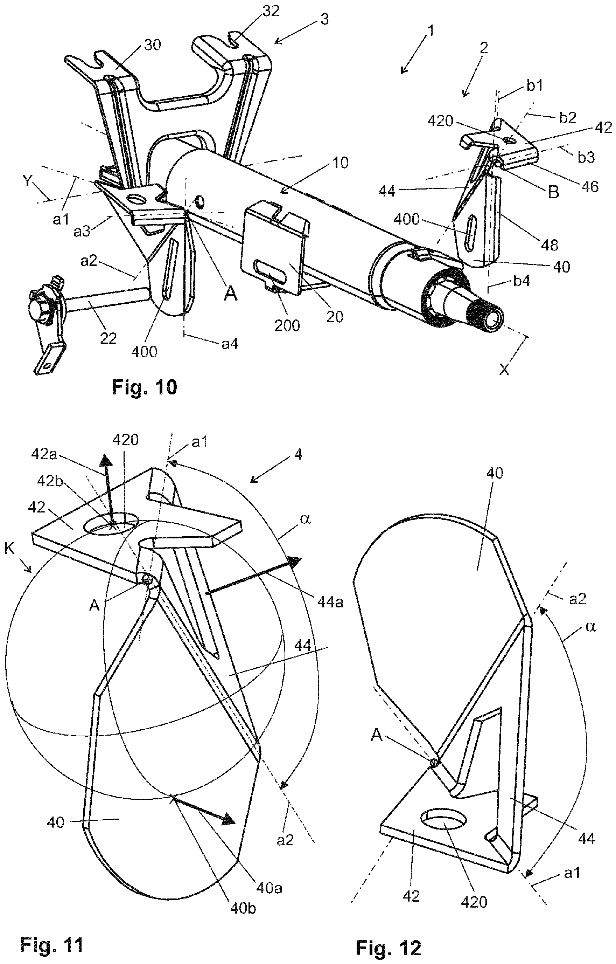

Gleichzeitig können die Schnittgeraden eines Befestigungselements innerhalb eines zweiten aufgespannten Kugelbereiches K liegen, wobei jedoch gleichzeitig auch der Befestigungspunkt 40b zwischen Manteleinheit 10 und Halteabschnitt 40 und gleichzeitig der Befestigungspunkt 42b zwischen Chassis und Befestigungsabschnitt 42 des jeweiligen Befestigungselements innerhalb oder auf der Oberfläche des zweiten Kugelbereichs K liegt. Der Durchmesser R des Kugelbereichs K ist dabei kleiner oder gleich dem doppelten Abstand der beiden Befestigungspunkte 40b und 42b des jeweiligen Befestigungselements zueinander. Bevorzugt schneiden die Schnittgeraden eines jeweiligen Befestigungselements den Kugelbereich K und die beiden Befestigungspunkte 40b und 42b des jeweiligen Befestigungselements liegen auf der Oberfläche des Kugelbereichs, wobei der Durchmesser des Kugelbereichs dem Abstand der jeweiligen Befestigungspunkte 40b und 42b zueinander entspricht. Dies ist in den Figuren 5 und 11 veranschaulicht.

Durch die Ausprägung der ersten Schnittgerade a1 und der zweiten Schnittgerade a2, welche sich im Schnittbereich A schneiden, kann aufgrund der auf diese Weise ausgebildeten dreieckigen Fläche des Verbindungsabschnittes 44 erreicht werden, dass im Schnittbereich A entsprechend eine Konzentration der Biegekanten der Flächen erreicht wird. Entsprechend ergibt sich hier auch ein Kraftknoten, welcher von den jeweiligen Krafteinleitungsbereichen, welche durch das Langloch 400 in dem Halteabschnitt 40 und die Befestigungsbohrung 420 im Befestigungsabschnitt 42 ausgebildet sind, beabstandet ist. Entsprechend kann durch die gezeigte geometrische Ausgestaltung eine erhöhte Steifigkeit des Befestigungselementes 4 erreicht werden, obwohl das Befestigungselement 4 selbst auf einfache Weise aus einem Blechstreifen hergestellt werden kann.

Dadurch, dass an den dem Verbindungsabschnitt 44 entgegengesetzt liegenden Kanten des Halteabschnittes 40 sowie des Befestigungsabschnittes 42 ein Versteifungsabschnitt 46 und ein Führungsabschnitt 48 ausgebildet sind, kann weiterhin auch eine Steifigkeit des Befestigungselements 4 erzielt werden, insbesondere auch dadurch, dass die dritte Schnittgerade a3 und die vierte Schnittgerade a4 sich ebenfalls im Schnittbereich A treffen, welcher außerhalb der Krafteinleitungsbereiche angeordnet ist.

Die gleichen Erwägungen gelten auch bezüglich des Befestigungselementes 4', wobei hier die erste Schnittgerade mit dem Bezugszeichen b1, die zweite Schnittgerade mit dem Bezugszeichen b2, die dritte Schnittgerade mit dem Bezugszeichen b3 und die vierte Schnittgerade mit dem Bezugszeichen b4 versehen sind, und ein gemeinsamer Schnittbereich B vorgesehen ist.

In den Figuren 5 und 6 ist ein Befestigungselement 4 noch einmal in einer vergrößerten, separaten Darstellung gezeigt. Zu erkennen ist, dass der Schnittbereich A hier mit der räumlichen Ausdehnung eines Kugelbereichs vorgesehen ist, welche die Schnittgeraden a1 bis a4 schneiden. Der Durchmesser r der Kugel ist bevorzugt kleiner als das Dreifache der Materialstärke s des Materials des Befestigungselementes 4. Je kleiner der Durchmesser des Schnittbereichs, desto höher ist auch die Steifigkeit des Befestigungselements. Gleichzeitig ist in Figur 5 auch der Kugelbereich K, mit seinem Durchmesser R veranschaulicht.

Wie aus den Figuren 5 und 6 erkennbar, kann das Befestigungselement 4 durch reine Stanz- und Biegeprozesse eines entsprechenden Blechstreifens mit einer konstanten Materialstärke s hergestellt werden, so dass die Herstellung des Befestigungselementes 4 der Montageeinheit 2 mit einem geringen Materialeinsatz und auf einfache Weise mit einfachen Werkzeugen erfolgen kann.

Eine besonders bevorzugte und stabile Geometrie ergibt sich für einen Raumwinkel α zwischen der ersten Schnittgeraden a1 und der zweiten Schnittgeraden a2 in einem Winkelbereich von 45° bis 85°, vorzugsweise von 55° bis 800°, besonders bevorzugt von 65° bis 75° und ideal von 70°.

Der Schnittbereich A befindet sich besonders bevorzugt im Bereich der Spitze des als Dreieck ausgebildeten Verbindungsabschnittes 44 und fällt ganz besonders bevorzugt mit dessen Spitze zusammen. Der Schnittbereich A kann jedoch auch außerhalb des Materials, aus welchem das Befestigungselement 4 hergestellt ist, liegen, insbesondere dann, wenn im Bereich der Spitze des Verbindungsabschnittes 44 beispielsweise eine Materialausnehmung gebildet ist, um die jeweiligen Biege- und Stanzprozesse zu vereinfachen und Behinderungen beim Biegen zu verhindern.

Der Verbindungsabschnitt 44 ist bevorzugt als ebenes Dreieck ausgebildet, an dessen Spitze der jeweilige Schnittbereich A liegt. Der Verbindungsabschnitt 44 ist bevorzugt als ebenes, gleichschenkeliges Dreieck ausgebildet.

Durch die vorgeschlagene Geometrie des Befestigungselementes 4 kann auf versteifende, dreidimensionale Taschen verzichtet werden und es können für die jeweiligen Abschnitte, insbesondere den Halteabschnitt 40, den Befestigungsabschnitt 42, den Verbindungsabschnitt 44, den Versteifungsabschnitt 46 und den Führungsabschnitt 48 jeweils ebene Flächen verwendet werden. Dadurch, dass keine dreidimensionalen Taschen vorgesehen sind, kann beispielsweise auch Stanzöl problemlos von den Bauteilen ablaufen, ohne dass nachgängige Reinigungsschritte vor dem Verbauen des jeweiligen Befestigungselementes 4 notwendig werden.

Das Befestigungselement 4 kann damit auf einfache Weise aus einer im Wesentlichen rechteckigen Grundform eines Bleches primär durch Stanz- und Biegeschritte hergestellt werden. In keinem der Biegeschritte muss notwendigerweise rechtwinkelig oder gar spitz gebogen werden, so dass jede der Biegekanten, welche sich entlang der Schnittgeraden a1 bis a4 erstrecken, in einem einzelnen Arbeitsschritt gebogen werden können. Tiefziehen ist ebenfalls nicht notwendig, so dass entsprechend die Herstellungskosten reduziert werden können.

An nicht funktionsrelevanten Bauteilkanten kann ein Radius zentrisch so um die kraft- oder formschlüssigen Krafteinleitungsbereiche ausgeführt werden, so dass Krafteinwirkungen beim Handling und beim Transport der jeweiligen Baugruppe nicht zu Verdrehungen der jeweiligen Befestigungselemente führen, so dass die Transportsicherheit und die Transportrobustheit insgesamt verbessert werden kann. Es findet entsprechend bei Schlägen auf die jeweiligen Kanten immer eine zentrale Einleitung in den jeweiligen Anbindungspunkt statt, so dass eine Verdrehung des Befestigungselements nicht stattfindet.

In Figur 7 ist eine Lenksäule 1 in einer weiteren Ausführungsform gezeigt, wobei das Befestigungselement 4 und das Befestigungselement 4' von ihrer Struktur her so aufgebaut sind, wie in den vorherigen Figuren. In dem in Figur 7 gezeigten Ausführungsbeispiel ist Lenksäule 1 dargestellt, deren Manteleinheit 10 und damit verbunden die Lenkspindel 12 nicht verstellbar ausgeführt ist. Aus der Figur 7 ist zu erkennen, dass die Montageeinheit 2 hier zwei Befestigungselemente 4, 4' vorsieht, deren Halteabschnitte 40 im Wesentlichen parallel zueinander angeordnet sind und mit dem Halteteil 20 verbunden sind.

Die erste Schnittgerade a1 entlang der Biegekante zwischen dem Befestigungsabschnitt 42 und dem Verbindungsabschnitt 44 des auf der linken Seite angeordneten Befestigungselementes 4 und die erste Schnittgerade b1 entlang der Biegekante zwischen dem Befestigungsabschnitt 42 und dem Verbindungsabschnitt 44 des auf der rechten Seite angeordneten Befestigungselementes 4' sind bevorzugt unter einem Raumwinkel β zwischen 60° und 120°, bevorzugt zwischen 70° und 110°, besonders bevorzugt zwischen 80° und 100° und im Idealfall von 90° vorliegend ausgebildet.

Da die beiden Befestigungselemente 4, 4' über ein zentrales Bauteil in Form des Halteteils 20 sowie der Manteleinheit 10 kraft- und formschlüssig aneinandergekoppelt sind, ist die gesamte Montageeinheit 2 hochgradig raumfest und besitzt entsprechend eine hohe Steifigkeit gegen das Eintragen von Kräften sowie von Drehmomenten. Entsprechend kann eine Radial- und eine Axialsteifigkeit sowie eine Verdrehsteifigkeit bereitgestellt werden, welche den Anforderungen einer Lenksäule 1 genügt. Weiterhin kann auch auf Grundlage der hohen Steifigkeit der Befestigungselemente 4, 4' auf Grundlage des reduzierten Materialeinsatzes beim Bereitstellen der der Befestigungselemente 4, 4' eine Lenksäule mit einer hohen Eigenfrequenzbereitgestellt werden.

In Figur 8 ist schematisch eine weitere Lenksäule 1 gezeigt, bei welcher eine zweite Montageeinheit 2' vorgesehen ist, welche ebenfalls Befestigungselemente 4, 4' aufweist, die eine Struktur aufweisen, die der Struktur der Befestigungselemente in Figur 7 entspricht. Entsprechend ist im hinteren Bereich der Lenksäule 1 eine Anbindung der Manteleinheit 10 verschwenkbar um eine horizontale Verschwenkachse Y über zwei Befestigungselemente 4, 4' dargestellt. Im vorderen Bereich ist eine Anbindung der Manteleinheit 10 über die zweite Montageeinheit vorgesehen, in der die Schwenkachse Y ausgebildet ist.

Die vordere, zum lenkradseitigen Ende 14 der Lenkspindel 12 der Manteleinheit 10 hin gerichtete Montageeinheit 2 ist so ausgebildet, wie in den Figuren 1 bis 4 gezeigt, nämlich als Montageeinheit, welche Befestigungselemente 4, 4' aufweist, welche eine Höhenverstellung der Manteleinheit 10 ermöglichen.
In der Figur 8 sind erste bis vierte Schnittgeraden c1 bis c4 des Befestigungselementes 4 der zweiten Montageeinheit 2' vorgesehen, welche sich in einem Schnittbereich C treffen. Weiterhin ist das Befestigungselement 4' der zweiten Montageeinheit 2' mit ersten bis vierten Schnittgeraden d1 bis d4 versehen, welche sich ebenfalls in einem Schnittbereich D treffen.

Die ersten Schnittgeraden c1, d1 der Befestigungselemente 4, 4' sind wiederum bevorzugt unter einem Raumwinkel β von 60° bis 120°, bevorzugt 70° bis 110°, besonders bevorzugt 80° bis 100° und ideal von 90° angeordnet, um eine besonders hohe Steifigkeit bereitzustellen.

In Figur 9 ist noch eine weitere Lenksäule 1 gezeigt, welche in ihrem hinteren Bereich wiederum eine Trageinheit 3 aufweist, die in der bereits oben beschriebenen Weise eine Anbindung der Manteleinheit 10 an das Chassis eines Kraftfahrzeugs ermöglicht. Eine Montageeinheit 2 ist vorgesehen, welche wiederum eine Höhenverstellung der Manteleinheit 10 durch eine Verschwenkung durch die in der Trageinheit 3 vorgesehene horizontale Verschwenkachse Y ermöglicht.

Die Befestigungselemente 4, 4' sind in dieser Ausprägung ebenfalls so ausgebildet, wie beispielsweise den Figuren 1 bis 4, sind jedoch in ihrer Orientierung umgekehrt. Mit anderen Worten ist der Raumwinkel β zwischen der ersten Schnittgeraden a1 des ersten Befestigungselementes 4 und der ersten Schnittgeraden b1 des zweiten Befestigungselementes 4' nun an dem dem lenkradseitigen Ende 14 der Spindel 12 zugewendeten Ende vorgesehen.

Die beiden Befestigungselemente 4, 4' sind in allen gezeigten Ausführungsbeispielen an einer durch die Fläche der Halteabschnitte 40 hindurch gelegte Ebene gespiegelt. Entsprechend kann eine symmetrische Befestigung der Manteleinheit 10 am Chassis des Kraftfahrzeugs erreicht werden.

In Figur 10 ist noch eine weitere Lenksäule 1 gezeigt, welche eine Trageinheit 3 aufweist, und welche eine Struktur aufweist, die der in Figur 1 bis 4 gezeigten Lenksäule im Wesentlichen entspricht. Zusätzlich zu der möglichen Höhenverstellung durch eine Verschwenkung um die horizontale Verschwenkachse Y entlang des Langloches 400 kann die Manteleinheit 10 auch in Richtung der Spindelachse X verschoben werden und entsprechend auf diese Weise eine Längenverstellung der Lenkradposition erreicht werden. Hierfür ist in dem Halteteil 20 das Langloch 200 entsprechend so verlängert ausgebildet, dass eine Verschiebung beziehungsweise Verstellung der Manteleinheit 10 gegenüber dem in Richtung der Spindelachse X feststehenden Fixierbolzen 22 erreicht werden kann.

In den Figuren 11 und 12 ist ein weiteres Befestigungselement 4 gezeigt, welches eine etwas einfachere Struktur aufweist, als die in den vorherigen Ausführungsbeispielen gezeigten Befestigungselemente 4. Insbesondere weist das Befestigungselement 4 hier nur einen Halteabschnitt 40, einen Befestigungsabschnitt 42 sowie einen Verbindungsabschnitt 44 auf, die jeweils als ebene Flächen ausgebildet sind. Weitere Flächen sind nicht vorgesehen.

Das Befestigungselement weist entsprechend nur die drei genannten Flächen auf, welche jeweils unter einem Winkel zueinander angeordnet sind. Der Verbindungsabschnitt 44 ist wiederum im Wesentlichen dreieckig ausgebildet. Damit treffen sich die erste Schnittgerade a1, die sich entlang einer Biegekante zwischen dem Befestigungsabschnitt 42 und dem Verbindungsabschnitt 44 erstreckt, und die zweite Schnittgerade a2, die sich entlang einer Biegekante zwischen dem Halteabschnitt 40 und dem Verbindungsabschnitt 44 erstreckt, wiederum in einem Schnittbereich A, der in dem Kugelbereich K liegt.

Der Raumwinkel α zwischen der ersten Schnittgeraden a1 und der zweiten Schnittgeraden a2 liegt auch in diesem Ausführungsbeispiel bevorzugt zwischen 45° und 85°, bevorzugt zwischen 55° und 80°, besonders bevorzugt zwischen 65° und 75° und ideal bei 70°.

Aus den Figuren 11 und 12 ergibt sich sofort, dass das Befestigungselement 4 auf eine besonders einfache Weise hergestellt werden kann, nämlich durch das Bereitstellen eines ebenen Bleches, welches durch einfache Stanz- und Biegeprozesse in die in den Figuren 11 und 12 gezeigte Form gebracht werden kann. Da die Biegeprozesse keine spitzwinkligen Kanten erfordern, kann der jeweilige Biegeprozess auch direkt in einem einzigen Schritt durchgeführt werden.

Durch die entsprechend einfache Ausbildung der Geometrie der Befestigungselemente der Montageeinheit können die Befestigungselemente mit durchgängig ebenen Flächen, außer im Bereich der jeweiligen Biegekanten, ausgebildet werden. Hierdurch wird ein noch einfacheres Herstellen der Befestigungselemente erreicht.

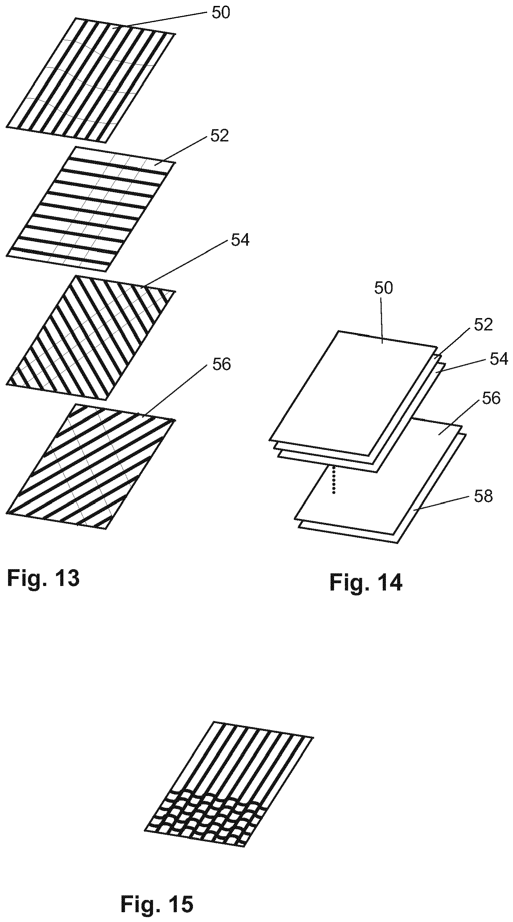

Die Befestigungselemente können aufgrund der einfachen Ausbildung als flächige Elemente auch aus einem Faserverbundwerkstoff hergestellt werden. In den Figuren 13 bis 15 ist dabei ein entsprechendes Gelege gezeigt, welches zur Ausbildung eines solchen Faserverbundwerkteiles verwendet werden kann. Das Gelege umfasst Fasermatten 50 bis 58, die eine Vorzugsrichtung der jeweiligen Fasern aufweisen.

Insbesondere wird dabei besonders bevorzugt die Faserrichtung der jeweiligen Fasermatten 50 bis 58 so in der Form ausgerichtet, dass die Fasern im Wesentlichen orthogonal oder auch mit einer geringen Winkelabweichung zu den jeweiligen Biegekanten, welche den jeweiligen Schnittgeraden a1, a2, a3, a4 in den Ausführungsbeispielen entsprechen, verlaufen. Dabei ist bevorzugt für jede Verlaufsrichtung eine paarweise Anordnung der jeweiligen Fasermatten 50 bis 58 vorgesehen.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

## Patentansprüche

1. Lenksäule (1) für ein Kraftfahrzeug, umfassend eine karosserieseitige Halterung umfassend zwei Befestigungselemente (4, 4'), die jeweils einen Befestigungsabschnitt (42) zum Befestigen des jeweiligen Befestigungselements (4, 4') am Chassis des Kraftfahrzeuges und jeweils einen Halteabschnitt (40) zum Halten einer eine Lenkspindel (12) drehbar um eine Rotationsachse (X) lagernden Manteleinheit (10) aufweisen, wobei die Rotationsachse (X) zwischen den beiden Halteabschnitten (40) angeordnet ist und der jeweilige Befestigungsabschnitt (42) und der jeweilige Halteabschnitt (40) einstückig miteinander ausgebildet sind, wobei zwischen dem jeweiligen Befestigungsabschnitt (42) und dem jeweiligen Halteabschnitt (40) ein Verbindungsabschnitt (44) angeordnet ist, der einstückig mit dem Befestigungsabschnitt (42) und dem Halteabschnitt (40) ausgebildet ist,
wobei der jeweilige Verbindungsabschnitt (44) mit dem jeweiligen Befestigungsabschnitt (42) über eine erste Schnittgerade (a1, b1, c1, d1) verbunden ist und der jeweilige Verbindungsabschnitt (44) mit dem jeweiligen Halteabschnitt (40) über eine zweite Schnittgerade (a2, b2, c2, d2) verbunden ist und die erste Schnittgerade (a1, b1, c1, d1) und die zweite Schnittgerade (a2, b2, c2, d2) eine Zwischenebene mit einer Flächennormalen (44a) aufspannen,
wobei die zweite Schnittgerade (a2, b2, c2, d2) mit einem Befestigungspunkt (40b) des Halteabschnitts (40) an der Manteleinheit (10) eine Halteebene mit einer Flächennormalen (40a) aufspannt, und
wobei die erste Schnittgerade (a1, b1, c1, d1) mit einem Befestigungspunkt (42b) des Befestigungsabschnitts (42) am Chassis eine Befestigungsebene mit einer Flächennormalen (42a) aufspannt, und
die drei Flächennormalen (40a, 42a, 44a) zueinander winkelig angeordnet sind, **dadurch gekennzeichnet, dass** die erste Schnittgerade (a1, b1, c1, d1) und die zweite Schnittgerade (a2, b2, c2, d2) mindestens eines der beiden Befestigungselemente (4, 4') sich in einem Schnittbereich (A, B, C, D) treffen, der innerhalb eines aufgespannten Kugelbereiches (K) mit einem Durchmesser (R), der kleiner oder gleich dem doppelten Abstand der Befestigungspunkte (40b, 42b) ist, liegt, wobei die beiden Befestigungspunkte (40,b, 42b) ebenfalls innerhalb des aufgespannten Kugelbereiches (K) liegen.

2. Lenksäule (1) nach Anspruch 1, **dadurch gekennzeichnet, dass** sich mindestens in einem der beiden Befestigungselemente (4, 4') die erste Schnittgerade (a1, b1, c1, d1) und die zweite Schnittgerade (a2, b2, c2, d2) in einem Schnittbereich (A, B, C, D) treffen, der als Schnittpunkt ausgebildet ist, oder in einem aufgespannten Kugelbereich mit einem Durchmesser (r) angeordnet ist, wobei der Durchmesser (r) kleiner als das Dreifache der Materialstärke (s) des für das Befestigungselement (4, 4') verwendeten Materials ist.

3. Lenksäule (1) nach einem der vorhergehenden Ansprüche, **dadurch gekennzeichnet, dass** jeweils genau ein einziger Verbindungsabschnitt (44) zwischen dem jeweiligen Befestigungsabschnitt (42) und dem jeweiligen Halteabschnitt (40) ausgebildet ist.

4. Lenksäule (1) nach einem der vorhergehenden Ansprüche, **dadurch gekennzeichnet, dass** der jeweilige Verbindungsabschnitt (44) im Wesentlichen als ebenes Dreieck ausgebildet ist und sowohl der Halteabschnitt (40) als auch der Befestigungsabschnitt (42) gegenüber dem Verbindungsabschnitt (44) abgewinkelt sind.

5. Lenksäule (1) nach einem der vorhergehenden Ansprüche, **dadurch gekennzeichnet, dass** zwischen der ersten Schnittgeraden (a1, b1, c1, d1) und der zweiten Schnittgeraden (a2, b2, c2, d2) ein Raumwinkel (α) von 45° bis 85° ausgebildet ist.

6. Lenksäule (1) gemäß einem der vorstehenden Ansprüche, **dadurch gekennzeichnet, dass** zumindest in einem der Befestigungsteile (4, 4') der Halteabschnitt (40), der Befestigungsabschnitt (42), und der Verbindungsabschnitt (44) als ebene Flächen ausgebildet sind.

7. Lenksäule (1) gemäß einem der vorstehenden Ansprüche, **dadurch gekennzeichnet, dass** mindestens eines der Befestigungselemente (4, 4') als Stanz- und Biegeteil aus einem eine konstante Materialstärke aufweisenden Blech hergestellt ist oder aus einem Faserverbundwerkstoff hergestellt ist.

8. Lenksäule (1) gemäß einem der vorhergehenden Ansprüche, **dadurch gekennzeichnet, dass** an zumindest einem der beiden Befestigungsteile (4, 4') an der dem Verbindungsabschnitt (44) abgewendeten Seite des Halteabschnitts (40) ein gegenüber diesem abgewinkelter Führungsabschnitt (48) angeordnet ist, wobei entlang einer Biegekante zwischen dem Führungsabschnitt (48) und dem Halteabschnitt (40) eine vierte Schnittgerade (a4, b4, c4, d4) ausgebildet ist, welche einen Schnittbereich (A, B, C, D) mit der ersten Schnittgerade (a1, b1, c1, d1) und der zweiten Schnittgerade (a2, b2, c2, d2) schneidet.

9. Lenksäule (1) gemäß einem der vorhergehenden Ansprüche, **dadurch gekennzeichnet, dass** an der dem Verbindungsabschnitt (44) abgewendeten Seite des Befestigungsabschnittes (42) ein gegenüber diesem abgewinkelter Versteifungsabschnitt (46) angeordnet ist, wobei entlang einer Biegekante zwischen dem Befestigungsabschnitt (42) und dem Versteifungsabschnitt (46) eine dritte Schnittgerade (a3, b3, c3, d3) ausgebildet ist, welche einen Schnittbereich (A, B, C, D) mit der ersten Schnittgerade (a1, b1, c1, d1) und der zweiten Schnittgerade (a2, b2, c2, d2) schneidet.

10. Lenksäule (1) gemäß einem der vorhergehenden Ansprüche, **dadurch gekennzeichnet, dass** die Halteebenen des ersten Befestigungselements (4) und des zweiten Befestigungselements (4'), zwischen welchen die Manteleinheit (10) gehalten ist, zueinander parallel angeordnet sind, wobei die ersten Schnittgeraden (a1, b1, c1, d1) der in Einbaulage angeordneten zwei Befestigungselemente (4, 4') jeweils zueinander unter einem Raumwinkel (β) von 60° bis 120° ausgerichtet sind.

## Claims

1. Steering column (1) for a motor vehicle, comprising a body-side holder comprising two fastening elements (4, 4') which each comprise a fastening portion (42) for fastening the respective fastening element (4, 4') to the chassis of the motor vehicle and each comprise a holding portion (40) for holding a casing unit (10) supporting a steering spindle (12) rotatably about an axis of rotation (X), wherein the axis of rotation (X) is arranged between the two holding portions (40), and the respective fastening portion (42) and the respective holding portion (40) are formed integrally with each other, wherein a connecting portion (44) is arranged between the respective fastening portion (42) and the respective holding portion (40), said connecting portion being formed integrally with the fastening portion (42) and the holding portion (40),
wherein the respective connecting portion (44) is connected to the respective fastening portion (42) via a first line of intersection (a1, b1, c1, d1), and the respective connecting portion (44) is connected to the respective holding portion (40) via a second line of intersection (a2, b2, c2, d2), and the first line of intersection (a1, b1, c1, d1) and the second line of intersection (a2, b2, c2, d2) define an intermediate plane with a surface normal (44a),
wherein the second line of intersection (a2, b2, c2, d2) together with a fastening point (40b) of the holding portion (40) to the casing unit (10) defines a holding plane with a surface normal (40a), and
wherein the first line of intersection (a1, b1, c1, d1) together with a fastening point (42b) of the fastening portion (42) to the chassis defines a fastening plane with a surface normal (42a), and the three surface normals (40a, 42a, 44a) are arranged at an angle to one another,
**characterized in that** the first line of intersection (a1, b1, c1, d1) and the second line of intersection (a2, b2, c2, d2) of at least one of the two fastening elements (4, 4') meet in a region of intersection (A, B, C, D) which lies within a defined spherical region (K) having a diameter (R) which is smaller than or equal to double the distance between the fastening points (40b, 42b), wherein the two fastening points (40b, 42b) likewise lie within the defined spherical region (K).

2. Steering column (1) according to Claim 1,
**characterized in that,** at least in one of the two fastening elements (4, 4'), the first line of intersection (a1, b1, c1, d1) and the second line of intersection (a2, b2, c2, d2) meet in a region of intersection (A, B, C, D) which is designed as an intersecting point or is arranged in a defined spherical region having a diameter (r), wherein the diameter (r) is smaller than three times the material thickness (s) of the material used for the fastening element (4, 4').

3. Steering column (1) according to one of the preceding claims, **characterized in that** in each case precisely one single connecting portion (44) is formed between the respective fastening portion (42) and the respective holding portion (40).

4. Steering column (1) according to one of the preceding claims, **characterized in that** the respective connecting portion (44) is substantially designed as a flat triangle, and both the holding portion (40) and the fastening portion (42) are angled in relation to the connecting portion (44).

5. Steering column (1) according to one of the preceding claims, **characterized in that** a solid angle (α) of 45° to 85° is formed between the first line of intersection (a1, b1, c1, d1) and the second line of intersection (a2, b2, c2, d2).

6. Steering column (1) according to one of the preceding claims, **characterized in that,** at least in one of the fastening parts (4, 4'), the holding portion (40), the fastening portion (42) and the connecting portion (44) are designed as flat surfaces.

7. Steering column (1) according to one of the preceding claims, **characterized in that** at least one of the fastening elements (4, 4') is produced as a punched and bent part from sheet metal having a constant material thickness or is produced from a fibre composite material.

8. Steering column (1) according to one of the preceding claims, **characterized in that** a guide portion (48) is arranged on at least one of the two fastening parts (4, 4'), on that side of the holding portion (40) which faces away from the connecting portion (44), said guide portion being angled with respect to said holding portion, wherein a fourth line of intersection (a4, b4, c4, d4) is formed along a bending edge between the guide portion (48) and the holding portion (40), said line of intersection intersecting a region of intersection (A, B, C, D) with the first line of intersection (a1, b1, c1, d1) and the second line of intersection (a2, b2, c2, d2).

9. Steering column (1) according to one of the preceding claims, **characterized in that** a reinforcing portion (46) is arranged on that side of the fastening portion (42) which faces away from the connecting portion (44), said reinforcing portion being angled with respect to said fastening portion, wherein a third line of intersection (a3, b3, c3, d3) is formed along a bending edge between the fastening portion (42) and the reinforcing portion (46), said line of intersection intersecting a region of intersection (A, B, C, D) with the first line of intersection (a1, b1, c1, d1) and the second line of intersection (a2, b2, c2, d2).

10. Steering column (1) according to one of the preceding claims, **characterized in that** the holding planes of the first fastening element (4) and of the second fastening element (4'), between which the casing unit (10) is held, are arranged parallel to each other, wherein the first lines of intersection (a1, b1, c1, d1) of the two fastening elements (4, 4') arranged in an installed position are in each case oriented with respect to one another at a solid angle (β) of 60° to 120°.

## Revendications

1. Colonne de direction (1) pour un véhicule automobile, comprenant une fixation du côté de la carrosserie comprenant deux éléments de fixation (4, 4') qui présentent chacun une portion de fixation (42) pour la fixation de l'élément de fixation respectif (4, 4') au châssis du véhicule automobile et à chaque fois une portion de retenue (40) pour retenir une unité d'enveloppe (10) supportant un arbre de direction (12) de manière rotative autour d'un axe de rotation (X), l'axe de rotation (X) étant disposé entre les deux portions de retenue (40), et la portion de fixation respective (42) et la portion de retenue respective (40) étant réalisées d'une seule pièce l'une avec l'autre, une portion de liaison (44) étant disposée entre la portion de fixation respective (42) et la portion de retenue respective (40), laquelle est réalisée d'une seule pièce avec la portion de fixation (42) et la portion de retenue (40),
la portion de liaison respective (44) étant connectée à la portion de fixation respective (42) par le biais d'une première droite d'intersection (a1, b1, c1, d1) et la portion de liaison respective (44) étant connectée à la portion de retenue respective (40) par le biais d'une deuxième droite d'intersection (a2, b2, c2, d2) et la première droite d'intersection (a1, b1, c1, d1) et la deuxième droite d'intersection (a2, b2, c2, d2) formant un plan intermédiaire avec une normale à la surface (44a),
la deuxième droite d'intersection (a2, b2, c2, d2) étant formée avec un point de fixation (40b) de la portion de retenue (40) au niveau de l'unité d'enveloppe (10) formant un plan de retenue avec une normale à la surface (40a), et
la première droite d'intersection (a1, b1, c1, d1) formant avec un point de fixation (42b) de la portion de fixation (42) au niveau du châssis un plan de fixation avec une normale à la surface (42a), et
les trois normales à la surface (40a, 42a, 44a) étant disposées de manière angulaire les unes par rapport aux autres, **caractérisée en ce que** la première droite d'intersection (a1, b1, c1, d1) et la deuxième droite d'intersection (a2, b2, c2, d2) d'au moins l'un des deux éléments de fixation (4, 4') se rencontrent au niveau d'une zone d'intersection (A, B, C, D) qui est située à l'intérieur d'une région sphérique tendue (K) ayant un diamètre (R) qui est inférieur ou égal à deux fois l'espacement des points de fixation (40b, 42b), les deux points de fixation (40b, 42b) étant également situés à l'intérieur de la région sphérique tendue (K).

2. Colonne de direction (1) selon la revendication 1, **caractérisée en ce qu'**au moins dans l'un des deux éléments de fixation (4, 4') la première droite d'intersection (a1, b1, c1, d1) et la deuxième droite d'intersection (a2, b2, c2, d2) se rencontrent dans une région d'intersection (A, B, C, D) qui est réalisée sous forme de point d'intersection ou qui est disposée dans une région sphérique tendue ayant un diamètre (r), le diamètre (r) étant inférieur à trois fois l'épaisseur de matériau (s) du matériau utilisé pour l'élément de fixation (4, 4').

3. Colonne de direction (1) selon l'une quelconque des revendications précédentes, **caractérisée en ce que** dans chaque cas exactement une portion de liaison unique (44) est réalisée entre la portion de fixation respective (42) et la portion de retenue respective (40).

4. Colonne de direction (1) selon l'une quelconque des revendications précédentes, **caractérisée en ce que** la portion de liaison respective (44) est réalisée essentiellement sous forme de triangle plan et à la fois la portion de retenue (40) et la portion de fixation (42) sont coudées par rapport à la portion de liaison (44).

5. Colonne de direction (1) selon l'une quelconque des revendications précédentes, **caractérisée en ce qu'**entre la première droite d'intersection (a1, b1, c1, d1) et la deuxième droite d'intersection (a2, b2, c2, d2) est réalisé un angle spatial (α) de 45° à 85°.

6. Colonne de direction (1) selon l'une quelconque des revendications précédentes, **caractérisée en ce qu'**au moins dans l'une des parties de fixation (4, 4'), la portion de retenue (40), la portion de fixation (42) et la portion de liaison (44) sont réalisées sous forme de surfaces planes.

7. Colonne de direction (1) selon l'une quelconque des revendications précédentes, **caractérisée en ce qu'**au moins l'un des éléments de fixation (4, 4') est fabriqué sous forme de pièce estampée et cintrée à partir d'une tôle présentant une épaisseur de matériau constante ou est fabriqué à partir d'un matériau composite renforcé par des fibres.

8. Colonne de direction (1) selon l'une quelconque des revendications précédentes, **caractérisée en ce qu'**au niveau d'au moins l'une des deux parties de fixation (4, 4') du côté de la portion de retenue (40) opposé à la portion de liaison (44), est disposée une portion de guidage (48) coudée par rapport à celle-ci, une quatrième droite d'intersection (a4, b4, c4 d4) étant réalisée le long d'une arête courbe entre la portion de guidage (48) et la portion de retenue (40), laquelle intersecte une région d'intersection (A, B, C, D) de la première droite d'intersection (a1, b1, c1, d1) et de la deuxième droite d'intersection (a2, b2, c2, d2).

9. Colonne de direction (1) selon l'une quelconque des revendications précédentes, **caractérisée en ce qu'**au niveau du côté de la portion de fixation (42) opposé à la portion de liaison (44) est disposée une portion de renforcement (46) coudée par rapport à celle-ci, une troisième droite d'intersection (a3, b3, c3, d3) étant réalisée le long d'une arête courbe entre la portion de fixation (42) et la portion de renforcement (46), laquelle intersecte une région d'intersection (A, B, C, D) avec la première droite d'intersection (a1, b1, c1, d1) et la deuxième droite d'intersection (a2, b2, c2, d2).

10. Colonne de direction (1) selon l'une quelconque des revendications précédentes, **caractérisée en ce que** les plans de retenue du premier élément de fixation (4) et du deuxième élément de fixation (4') entre lesquels est retenue l'unité d'enveloppe (10) sont disposés parallèlement l'un à l'autre, les premières droites d'intersection (a1, b1, c1, d1) des deux éléments de fixation (4, 4') disposés dans la position d'installation étant orientées à chaque fois l'une par rapport à l'autre suivant un angle spatial (β) de 60° à 120°.
